(19)

Europäisches Patentamt
European Patent Office
Office européen des brevets

(11) **EP 1 892 729 A1**

(12) **EUROPEAN PATENT APPLICATION**

(43) Date of publication:
    **27.02.2008  Bulletin 2008/09**

(51) Int Cl.:
    ***G21K 4/00*** *(2006.01)*     ***G01T 1/29*** *(2006.01)*
    ***G03B 42/02*** *(2006.01)*

(21) Application number: **06118703.5**

(22) Date of filing: **10.08.2006**

(84) Designated Contracting States:
    **AT BE BG CH CY CZ DE DK EE ES FI FR GB GR HU IE IS IT LI LT LU LV MC NL PL PT RO SE SI SK TR**
    Designated Extension States:
    **AL BA HR MK YU**

(71) Applicant: **Agfa HealthCare NV**
    **2640 Mortsel (BE)**

(72) Inventor: **Struye, Luc**
    **c/o AGFA-GEVAERT**
    **2640 Mortsel (BE)**

(74) Representative: **Theunis, Patrick et al**
    **Agfa-Gevaert N.V.**
    **HE / Intellectual Property 3802**
    **Septestraat 27**
    **2640 Mortsel (BE)**

(54) **Method of manufacturing a radiation image storage panel**

(57)    In a method of manufacturing a radiation image storage phosphor plate, comprising in its phosphor layer a storage phosphor of the type having an alkali metal halide salt as a main component and a lanthanide as a dopant, the plate after having been manufactured is uniformly exposed, i.e., exposed with a constant intensity and with a homogeneous energy distribution over its whole surface area, in order to absorb an X-ray dose in the range from 1 to 10 Gy.

Fig. 1B

Normalised sensitivity (%) as a function of cumulative dose

## Description

FIELD OF THE INVENTION

The present invention is related with a method to prepare a radiation image storage panel, ready to be delivered to the customer, wherein said panel is provided with a binderless vapour deposited storage phosphor layer of a lanthanide doped alkali metal halide type phosphor.

BACKGROUND OF THE INVENTION

A well-known use of phosphors is in the production of X-ray images. In a conventional radiographic system an X-ray radiograph is obtained by X-rays transmitted image-wise through an object and converted into light of corresponding intensity in a so-called intensifying screen (X-ray conversion screen) wherein phosphor particles absorb the transmitted X-rays and convert them into visible light and/or ultraviolet radiation to which a photographic film is more sensitive than to the direct impact of X-rays.

According to another method of recording and reproducing an X-ray pattern as disclosed e.g. in US-A 3,859,527 a special type of phosphor is used, known as a photostimulable phosphor, which, being incorporated in a panel, is exposed to an incident pattern-wise modulated X-ray beam and as a result thereof temporarily stores energy contained in the X-ray radiation pattern. At some interval after exposure, a beam of visible or infra-red light scans the panel to stimulate the release of stored energy as light that is detected and converted to sequential electrical signals which can be processed to produce a visible image. For this purpose, the phosphor should store as much as possible of the incident X-ray energy and emit as little as possible of the stored energy until stimulated by the scanning beam. This imaging technique is called "digital radiography" or "computed radiography".

CsBr doped with divalent Eu is a particularly promising X-ray storage phosphor which can be grown in form of needle-shaped crystals. In basic patent US-A 6,802,991 a method is offered for producing such a phosphor by vapor deposition in a vapor deposition apparatus by heating a mixture of CsBr with an Europium compound selected from the group consisting of e.g. $EuBr_2$, $EuBr_3$ and EuOBr, by heating said mixture at a temperature above 450°C, and depositing said phosphor on a substrate by a method selected from the group consisting of physical vapor deposition, chemical vapor deposition or an atomization technique. In US-A 6,730,243 a method for preparing a CsBr:Eu phosphor comprises the steps of mixing or combining CsBr with between $10^{-3}$ mol % and 5 mol % of a europium compound wherein said europium compound is a member selected from the group consisting of $EuBr_2$, $EuBr_3$ and EuOBr, vapor depositing that mixture onto a substrate, forming a binderless phosphor screen, cooling said phosphor screen to room temperature, bringing said phosphor screen to a temperature between 80 and 220°C and maintaining it at that temperature for between 10 minutes and 15 hours, i.e. an annealing step is added in order to further correct phosphor speed. As taught in EP-A 1 443 525 further corrections can be made by a radiation exposure treatment during or after at least one of the preparation steps with energy from radiation sources emitting short ultraviolet radiation in the range from 150 nm to 300 nm with an energy of at least 10 mJ/mm$^2$.

Correction of speed, in order to optimize speed increase, is further offered, as taught in US-A 6,852,357 by depositing on the support a prismatic europium activated cesium bromide phosphor crystal layer on the support in a gas phase; and heating the crystal layer at a temperature of lower than 300°C but not lower than 50°C for a period of 1 to 8 hours in an inert gas atmosphere or an inert gas atmosphere containing a small amount of oxygen or hydrogen. In US-A 2005/040340 an annealing step, called heat treatment, is performed at a temperature of from 80°C to 300°C.

It has always been an attempt to get a speed, as high as possible, in order to provide the customer with plates, allowing as low a dose as possible, in favour of decrease of harmfull X-ray exposure to be given to patients. It has however been established that during the time that such a storage phosphor plate was frequently re-used, a change of speed was found as a function of time and of homogeneity of speed over its whole surface area. Sites on the said surface area where a high dose of X-rays was captured, as e.g. at the borders, where almost no absorbing patient body is positioned, were suffering from higher changes in speed, whereas in the middle of the plate a lower change in speed occurred thanks to presence of an absorbing patient body at that more central positioned site of the plate. Nevertheless as a consequence of those differences in speed changes with user time, homogeneity of speed over the surface area of the plate was tremendously changing too.

Even for a plate evenly or equally exposed as a whole, a remarkable change in speed was experimentally observed as a function of cumulative exposure dose with time. As such a situation is representative for the situation as a function of the life cycle of a plate or panel due to frequent use by the customer, i.e. the radiologist, further research was required in order to reduce changes in speed per site on the panel and of speed homogeneity over the surface area of the said panel.

Despite many techniques available for optimizing speed of a readout storage phosphor plate or panel, there is an ever lasting need to deliver plates to the cusomer that stand for about a constant speed and constant inhomogeneity as a function of time when the same plate becomes frequently reused in radiographic applications over its life cycle.

SUMMARY OF THE INVENTION

It is an object of the present invention to provide a method for manufacturing vapor deposited radiation image storage phosphor panels having an about constant speed over its total life cycle when frequently reused, wherein such constant speed is not only expected at almost all of the sites on the surface area of the panel taken individually, but also over the surface area of the panel taken as a whole, thereby standing for a reproducible speed homogeneity over the whole surface area of the storage phosphor panel.

The above-mentioned advantageous effects have been realized by providing a method for manufacturing a radiation image storage phosphor panel by application of the specific step in the manufacturing before delivering the plate to the customer, as has been set out in claim 1. Specific features for preferred embodiments of the present invention are set out in the dependent claims.

It has unexpectedly been found now that in a method of manufacturing a radiation image storage phosphor plate, comprising in its phosphor layer a storage phosphor of the type having an alkali metal halide salt as a main component and a lanthanide as a dopant, the plate should uniformly be exposed after manufacturing, i.e. exposed with a constant intensity and with a homogeneous energy distribution over its whole surface area, and more preferably with an X-ray dose, absorbed by the plate, in the range from 1 to 10 Gy in order to "repair" speed changes and speed homogeneity changes over the whole surface area of the plate or panel during frequent re-use. A method of manufacturing a radiation image storage phosphor plate or panel, wherein the said plate or panel comprises a storage phosphor layer wherein a radiation image storage or photostimulable phosphor is a phosphor having an alkali metal halide salt as a main component and a lanthanide as a dopant, is thus characterised in that after its manufacturing and before being used by the customer, said panel is uniformly exposed with X-rays over its whole surface area, in order to get an absorbed X-ray dose in the range from 1 to 10 Gy.

Particular embodiments in the preparation method of phosphor panels according to the present invention are as follows:

-    said absorbed dose should be in the range from 2 to 6 Gy, and even more preferably in the range of 2 to 3 Gy, X-rays having a beam quality confirm with RQA5;

-    said radiation image storage phosphor is a phosphor having an alkali metal halide salt as a main component and a lanthanide as a dopant, more particularly the radiation image storage phosphor is a CsBr:Eu phosphor, preparation methods of which are described hereinafter.

Further advantages and particular embodiments of the present invention will become apparent from the following description, without however limiting the invention thereto.

DEFINITION

The term "flat field" should be understood as "uniformly exposed", i.e. exposed with a constant intensity and with a homogeneous energy distribution in order to avoid "phantoms". In a standard procedure use is made therefor from RQA 5 (International Electrotechnical Commission - IEC61267:1994) beam quality.

BRIEF DESCRIPTION OF THE DRAWINGS

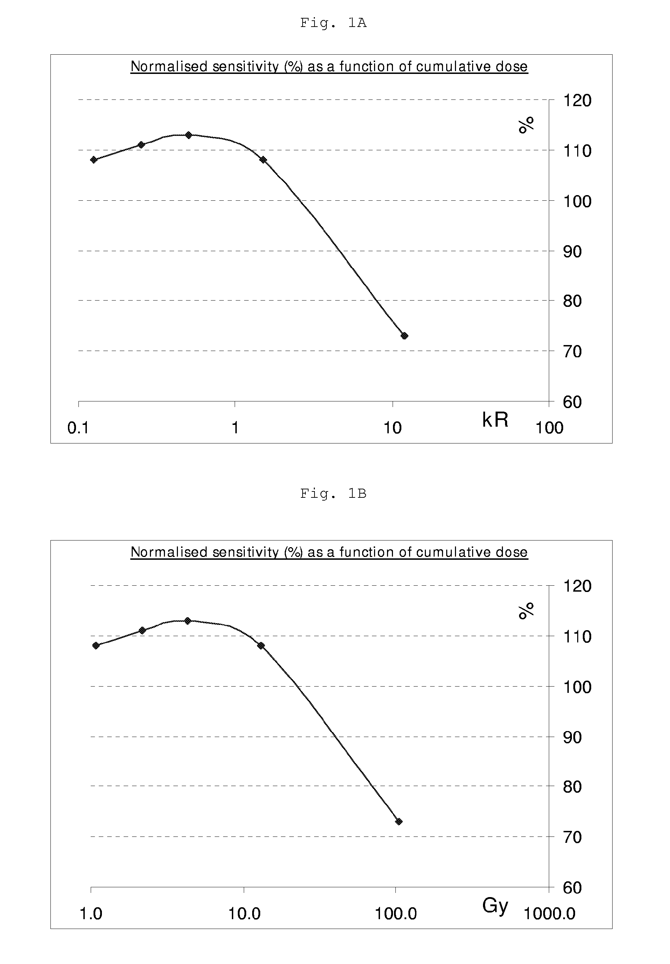

Fig. 1 A and B are representative of the normalised sensitivity - given in percentages - as a function of a cumulative X-ray dose, absorbed by the plate, wherein said dose is given in kR (kiloRöntgen) - see Fig. 1A - and Gy ("gray", known as a unit of absorbed dose, equivalent with 1 J/kg) - see Fig. 1B - respectively.

DETAILED DESCRIPTION OF THE INVENTION

According to the present invention a method of manufacturing a radiation image storage phosphor plate is provided wherein, in a last preparation step before delivering said plate to the customer, the plate is uniformly exposed, i.e. exposed with a constant intensity and with a homogeneous energy distribution over its whole surface area, with an X-ray dose in the range from 1 to 10 Gy as absorbed by the said phosphor plate.

In a particular embodiment of the method of the present invention the absorbed dose as practically applied is in the range from 2 to 6 Gy, and still more preferably said dose is in the range of 2 to 3 Gy and the X-ray has a beam quality conform with RQA.

More particularly, according to the method of the present invention said X-ray dose has a beam quality conform with RQA5, following International Electrotechnical Commission - IEC61267:1994.

It has experimentally been established that accumulative doses given to a CsBr:Eu phosphor plate in particular, as a consequence of subsequent exposures, tend to give rise to changes in speed, in that there is a tendency to get a speed increase up to a total dose of about 5 Gy, more particularly up to a cumulative dose of 600 Röntgen or 5.2 Gy, whereafter speed decreases as the same plate further gets increasing X-ray doses. Said speed increase is in the range of about 13%.

Taking into account that a radiologist as a customer makes use of such a plate until it has absorbed a total cumulative dose of about 1,000 Röntgen, i.e. an total absorbed dose of about 8 Gy, then it is justified to prepare the storage phosphor plate or panel in the manufacturing by providing a "speed correction step" as a last step, wherein a "flat field" exposure is given with an X-ray dose in the range from 1 to 10 Gy.

In the particular case wherein a "flat field" exposure is given with an X-ray dose of about 300 Röntgen, i.e. 2.6 Gy, a total life time cycle up to a cumulative dose of 1300 Röntgen can be expected, wherein as an advantageous effect a change in speed of less than 5% is observed over the said total life time cycle. If such a "pretreatment exposure" (radiation exposure treatment before effective use) at the end of the manufacturing is not given to the plate or panel, then a speed in change of more than 5% can be expected, i.e. at least about 13 % as will become clear from the examples hereinafter.

A radiation image phosphor or scintillator panel advantageously has a phosphor layer which comprises vapour deposited needle-shaped phosphor crystals composed of a matrix component and an activator. Said matrix compound is most generally represented by the formula (I)

$$M^1X.aM^2X'_2.bM^3X''_3 \quad (I)$$

wherein $M^1$ represents an alkali metal selected from the group consisting of Li, Na, K, Rb and Cs;

$M^2$ represents a divalent metal selected from the group consisting of Be, Mg, Ca, Sr, Ba, Zn, Cd, Cu and Ni;

$M^3$ represents a trivalent metal selected from the group consisting of Sc, Y, La, Ce, Pr, Nd, Pm, Sm, Eu, Gd, Tb, Dy, Ho, Er, Tm, Yb, Lu, Al, Ga and In; X, X' and X" each represent a halogen selected from the group consisting of F, Cl, Br and I; a and b each represent $0 < a < 0.5$ and $0 \leq b < 0.5$.

Raw materials suitable for use as matrix components preferably are alkali halide salt matrix component(s) and more preferably said alkali halide salt is CsX, wherein X represents Cl, Br, I or a combination thereof.

Activator components preferably are components having as activator element, an element selected from the group consisting of Eu, Tb, Bi, In, Ga, Cs, Ce, Tm, Dy, Pr, Ho, Nd, Yb, Er, Gd, Lu, Sm, Y, Tl, Na, Ag, Cu and Mg.

In a more particular embodiment thereof said vapour deposited needle-shaped phosphor is a photostimulable CsBr:Eu phosphor, as e.g. described in US-A 6,802,991.

In the method according to the present invention, said CsBr:Eu phosphor is advantageously prepared by mixing CsBr as an alkali metal halide salt and wherein as a lanthanide dopant salt use is made of $EuX_2$, $EuX_3$, EuOX or $EuX_z$, wherein $2 < z < 3$ and wherein X is one of Br, Cl or a combination thereof.

In another embodiment thereof, according to the present invention, said CsBr:Eu phosphor is advantageously prepared by mixing CsBr as an alkali metal halide salt and wherein between $10^{-3}$ and 5 mol % of a Europium compound selected from the group consisting of $EuX_2$, $EuX_3$, EuOX, or $EuX_z$, wherein $2<z<3$ and wherein X is one of Br, Cl or a combination thereof, firing the mixture at a temperature above 450°C, cooling said mixture, and recovering the CsBr:Eu phosphor.

In still another embodiment thereof, according to the present invention, said CsBr:Eu phosphor is advantageously prepared by mixing CsBr as an alkali metal halide salt and a combination of an alkali metal halide salt and a lanthanide dopant salt according to the formula $Cs_xEu_yX'_{x+\alpha y}$, wherein $x/y > 0.25$, wherein $\alpha \geq 2$ and wherein X' is a halide selected from the group consisting of Cl, Br and I and combinations thereof.

According to the method of the present invention said CsBr:Eu phosphor screen is obtained by applying said phosphor on a substrate by a method selected from the group consisting of physical vapour deposition, thermal vapour deposition, chemical vapour deposition, radio frequency deposition and pulsed laser deposition.

Needle-shaped phosphors, arranged in a binderless layer, are thus manufactured by a vapour deposition method. As examples of vapour deposition methods, a physical vapour deposition method (PVD), a sputtering method, a chemical vapour deposition method (CVD), and vaporisation techniques like ion plating method and atomisation techniques like electron beam evaporation are particularly well-known. In a method of preparing a radiation image storage panel said phosphor layer is coated onto a support by a technique selected from the group consisting of physical vapour deposition, chemical vapour deposition and an atomisation technique. As an atomisation technique, electron beam vaporisation can be used, as has e.g. been described in US-A's 6,740,897 and 6,875,990 and in US-Applications 2002/050570, 2004/075062 and 2004/149931. In the electron beam evaporation technique, an electron beam generated by an electron gun is applied onto the evaporation source and an accelerating voltage of electron beam preferably is in the range of 1.5 kV to 5.0 kV. By applying the electron beam technique, the evaporation source of matrix component and activator element is heated, vaporised, and deposited on the substrate. Physical vapour deposition techniques are particularly suitable for use in the deposition of binderless needle-shaped crystals in the phosphor layer of the present invention, such as resistive heating, sputtering and RF induction techniques. Resistive heating vacuum deposition, may advantageously be applied as has been described e.g. in US-A's 6,720,026; 6,730,243 and 6,802,991 and in US-Application 2001/007352. This technique is recommended as a method in order to vapour deposit the needle-shaped binderless storage phosphors for a panel according to the present invention. In the resistance heating evaporation, the evaporation sources are heated by supplying electrical energy to the resistance heating means: crucible or boat configurations - preferably composed of refractory materials - in a vapour deposition apparatus, in order to practically realise a homogeneous deposit of vapour deposited phosphor material which may be applied as has e.g. been disclosed in US-Applications 2005/000411, 2005/000447 and 2005/217567.

Vapour deposition of a phosphor layer at high temperatures is performed as a process providing high phosphor packing densities, preferably in the range from 60% to 90%. Said vapour deposition process is advantageously performed in a vapour deposition chamber under low pressure by heating selected raw materials. As described in US-A 6,802,991 depositing of the europium doped cesium halide phosphor on a substrate may be performed by a method selected from the group consisting of physical vapour deposition, chemical vapour deposition or an atomisation technique, like e.g. electron-beam deposition or plasma chemical vapour deposition. Besides controlling vapour pressure (e.g. under medium vacuum in the range from 0.05 to 10 Pa as in US-A 2005/0077478 or at a pressure in the range of 0.3 to 3 Pa in the presence of an inert gas as e.g. argon or nitrogen as in US-A 2004/149929 or even to a pressure of less than 0.01 Pa as in US-A 6,802,991) and substrate temperature as in that US-A 6,802,991; and also as has been set forth in US-A 6,720,026 wherein the support has been cooled before the vapour stream causes deposition of vaporised phosphor onto the support, it is recommended that the evaporation source has a water content of not more than 0.5 wt%, as has been set forth in US-A 2003/113,580. Vapour deposition in a vacuum deposition apparatus as in the present invention thus requires adjustment of a predetermined degree of vacuum. For a binderless needle-shaped storage phosphor layer in a panel according to the present invention, formation of said phosphor under a high vacuum is desirable: a degree of vacuum of $1 \times 10^{-5}$ to 5 Pa, and, more specifically, from $1 \times 10^{-2}$ to 2 Pa is desired, wherein an inert gas, such as an Ar or Ne noble gas, or alternatively, an inert gas as nitrogen gas, may be introduced into the vacuum deposition apparatus. Evacuation in order to give an even lower inner pressure of $1 \times 10^{-5}$ to $1 \times 10^{-2}$ Pa is more preferred for electron beam evaporation. Introduction of oxygen or hydrogen gas may be advantageously performed, more particularly in order to enhance reactivity and/or e.g. in an annealing step. Introduction of an inert gas can moreover be performed in favour of cooling the vapour stream before deposition onto the titanium (alloy) substrate and/or the substrate, whereupon phosphor vapour raw materials should be deposited as disclosed in US-A 6,720,026. Alternatively one side of the support may be heated while the other side may be cooled while performing vapour deposition as disclosed in US-A 7,029,836.

After the deposition procedure is complete, the deposited layer is preferably subjected to heat treatment or annealing procedure, which is carried out generally at a temperature of 100 to 300°C for 0.5 to 3 hours, preferably at a temperature of 150 to 250°C for 0.5 to 2 hours, under inert gas atmosphere which may contain a small amount of oxygen gas or hydrogen gas. Annealing procedures may be applied as described in US-A 6,730,243; 6,815,692 and 6,852,357 or in US-Applications 2004/0131767, 2004/0188634, 2005/0040340 and 2005/0077477.

In the screen or panel according to the present invention said phosphor is a photostimulable phosphor as applied in CR techology. The photostimulable screen or panel is coated as a so-called "needle image phosphor" plate also called "NIP" screen, preferably coated by vapour deposition with CsBr:Eu needle-shaped crystals. Said needle-shaped crystals present in a binderless layer may be scraped off from the support whereupon vapor deposition has been applied, optionally milled in order to reduce the length of the needles (normally in the range from 100 up to 1000 $\mu$m), and coated after having been dispersed in a binder and forming a "pseudo-PIP" screen, i.e. a powder image phosphor plate, prepared from a binderless phosphor by dispersing said phosphor in a binder.

In the method of curing a layer-forming formulation according to the present invention, curing proceeds by ultra-violet radiation or by electron beam curing.

Moreover in the method according to the present invention, curing proceeds by ultra-violet radiation or by electron beam curing. More in particular curing proceeds after coating said layer-forming formulation as a protective coating upon a phosphor layer or scintillator layer present on a support, followed by drying.

In the method according to the present invention, said coating is performed by doctor blade coating or by bar coating.

Embodiments for the layer arrangement of the phosphor or scintillator screen, plate or panel are selected from following.

In one aspect the the layer arrangement of the screen or panel is normally so that, coated upon a support layer, there is an intermediate layer between support and phosphor layer (such as parylene as disclosed in US-A 2004/0051441 and US-A 2004/0051438 or another, e.g. dye-containing layer as in US-A 6,927,404) wherein such a parylene layer may also be present between phosphor layer and outermost protective layer or topcoat as in US-A 6,710,356 or as described in US-A 6,822,243. A good adhesion between the two protective layers is advantageously provided when use is made of a phosphoric acid ester compound as disclosed in US-A 2005/0067584. The parylene layers mentioned above are particularly recommended to be applied as layers protecting the phosphor or scintillator from moisture, as is appreciated well when use is made of alkali metal halide scintillators or phosphors, known as being very sensitive to humidity of the environment.

The support can be any support known in the art: any solid of an organic or inorganic nature, which can assume any geometrical shape, such as foils, fibers (e.g. carbon fiber reinforced resin sheets and more particularly sheets, each of which includes carbon fibers arranged in a direction and impregnated with a heat resistant resin such that directions of the carbon fibers in the carbon fiber reinforced resin sheets are different from each other), and particles can be used. As an inorganic non-metallic support chemically reinforced glass or crystallised glass can be used. Inorganic metallic supports, suitable for use are, e.g. metal substrates such as those of aluminum, titanium, lead, iron, copper, steel, molybdenum, beryllium; supports of metallic and non-metallic oxides such as those of aluminum, titanium, lead, copper, beryllium, manganese, tungsten, vanadium, and silicon oxides. As an organic support a polyimide sheet, epoxy compounds and thermoplastic and thermosetting compounds of different compositions, polyether, polyester and polycarbonate compositions may be used, without however being limited thereto. It is recommended to subject the support to cleaning procedures as to washing and degreasing before applying a protective layer unit or arrangement as set forth above.

As in EP-Applications Nos. 06 118 157 and 06 118 158, both filed July 31, 2006, topcoats made less sensitive to mechanical damage and to organic cleaning solutions may advantageously be applied. So photo- or electron beam curable compositions comprising a polymer or copolymer and a (meth)acrylate type monomer having more than one (meth)acrylate group per monomer molecule and at least one ethyleneoxy group per (meth)acrylate group in said monomer are particularly suitable for use in the top-coat layer of a photostimulable phosphor screen comprising a support, a storage phosphor layer and an outermost top-coat, wherein said top-coat comprises a cellulose ester polymer. Alternatively photo-curable compositions comprising a polymer or copolymer and a (meth)acrylate type monomer with more than one (meth)acrylate group per monomer molecule and more than two ethyleneoxy groups per (meth)acrylate group in said monomer are also particularly suitable for use as a topcoat layer for storage phosphor screens or panels. When a storage phosphor screen with a topcoat layer has protruding beads it is important that the beads do not touch mechanical parts of the scanner and that this is true even when the storage panel shows some wobble during transport in the scanner. Therefore beads when used as spacing particles in a storage phosphor screen of the present invention preferably have a median volume diameter, $d_{v50}$, so that 0.5 $\mu$m $\leq$ dv50 $\leq$ 25 $\mu$m and a median numeric diameter, $d_{n50}$, so that 0.1 $\leq$ $d_{v50}/d_{n50} \leq$ 1.20. Further the beads are preferably adapted to the thickness, t, of the layer B on the storage panel of the present invention so that said polymeric beads have a median volume diameter, $d_{v50}$, wherein 0.25 $\leq d_{v50}/t \leq$ 4.0.

A phosphor panel of the present invention can be a self-supporting panel as well as a panel comprising a support. This support can be any support known in the art, but in view of the desired high humidity resistance of the screens, a support with very low water vapour permeability is preferably used. A preferred support is a support of anodised aluminium and the supports as disclosed in US-A 6,815,095 and US-Application 2003/0134087.

In a particular embodiment of the present invention the surface of the phosphor layer may be smaller than the surface of the support so that the phosphor layer does not reach the edges of the support. Thus a panel with a support having a surface larger than the main surface of the phosphor layer, so that the phosphor layer leaves a portion of the support free, and wherein the protective layer comprising layer A and topcoat layer B covers at least in part the portion of the support left free by the phosphor layer represents a particular embodiment of the present invention as already disclosed hereinbefore. An advantage of such a construction resides in the fact that the edges of the phosphor layer do not touch mechanical parts of the apparatus and are thus less easily damaged during use of the panel, more particularly e.g. during transport in the scanner. Another advantage of this construction is that no special edge reinforcement is necessary (although, if desired, further edge reinforcement can be applied). Although a construction of a phosphor panel wherein the surface of the phosphor layer is smaller than the surface of the support, so that the phosphor layer does not reach the edges of the support, represents a specific embodiment of the present invention, such a construction can be beneficial for the manufacture of any phosphor panel covered with any protective layer known in the art.

In the case wherein between the support material and the phosphor layer a parylene layer is present, the surface roughness of the covered support shows a better smoothness as surface roughness decreases (preferably 0.5 or less and even more preferably 0.1 or less), as described in US-A 2004/0051438 which may be in favour of depositing columnar crystals or needles having smaller diameters, thereby leading to an improved packing density of the said needles per square unit of the surface area of the vapour deposited photostimulable phosphor layer and improved sharpness or image definition as obtained with columnar, needle-shaped or cylindrical phosphors as disclosed in US-A 6,967,339.

In the more particular embodiment, when said phosphor has been vapor deposited onto a support in a vapor depositing system by thermal or by electron beam vaporization, said phosphor is a binderless phosphor, such a panel wherein said binderless photostimulable phosphor is a CsX:Eu stimulable phosphor, wherein X represents a halide selected from the group consisting of Br and Cl has e.g. been disclosed in US-A 6,802,991. Besides CsX as a matrix compound and Eu as a dopant, impurities and further elements, whether or not as impurities, may be present in the phosphor composition as described in US-A 2006/076525. Such binderless CsX:Eu stimulable phosphor layers are especially in favour of sharpness due to a good absorption and optical reflection within needle-shaped phosphor crystals. Between said needles voids are present which may be filled, up to a defined extent, as has been set forth in US-A 6,800,362 and US-Application 2003/0168611. Further in favour of image sharpness said phosphor particles may be coloured with a nanocrystalline dye as described in US-A 6,977,385.

When on such a phosphor layer with needle shaped phosphor crystals, separated by voids, a layer A with very low water permeability is deposited, it is preferred that this layer A is a chemical vapor deposited parylene layer, while such a layer not only covers the surface of the needle crystals, but also covers the voids between the needles thus protecting the edges of the phosphor needles thoroughly against humidity. A phosphor panel of the present invention may also comprise edge reinforcements as the ones described in e.g. US-A 5 334 842 and US-A 5 340 661.

While the present invention will hereinafter in the examples be described in connection with preferred embodiments thereof, it will be understood that it is not intended to limit the invention to those embodiments.

Examples

CsBr:Eu photostimulable phosphor screens were prepared by a vapour deposition process, on flexible chromium sealed anodized aluminum plates, in a vacuum chamber by means of a resistive heating of crucibles, having as starting materials a mixture of CsBr and EuOBr as raw materials. Said deposition process onto said flexible anodised aluminum supports was performed in such a way that said support was rotating over the vapour stream.

An electrically heated oven and two refractory trays or boats - one placed on the left side, the other on the right side, were used, in which 330 g of a mixture of CsBr and EuOBr as raw materials in a 99.5%/0.5% CsBr/EuOBr percentage ratio by weight were present as raw materials in each of said crucibles in order to become vaporized.

As crucibles an elongated boat having a length of 100 mm was used, having a width of 35 mm and a side wall height of 50 mm composed of "tantalum" having a thickness of 0.5 mm, composed of 3 integrated parts: a crucible container, a "second" plate with slits and small openings and a cover with slit outlet. The longitudinal parts were fold from one continuous tantalum base plate in order to overcome leakage and the head parts are welded. Said second plate was mounted internally in the crucible at a distance from the outermost cover plate which was less than 2/3 of said side wall height of 45 mm. Under vacuum pressure (a pressure of 2 x $10^{-1}$ Pa equivalent with 2 x $10^{-3}$ mbar) maintained by a continuous inlet of argon gas into the vacuum chamber, and at a sufficiently high temperature of the vapour source (760°C) the obtained vapour was directed towards the moving sheet support and was deposited thereupon successively while said support was rotating over the vapour stream. Said temperature of the vapour source was measured by means of thermocouples present outside and pressed under the bottom of said crucible and by tantalum protected thermocouples present in the crucible. Before starting evaporation in the vapour deposition apparatus, while heating the raw mixture in the boat or crucible and to make them ready for evaporation, shutters are covering the boats, trays or crucibles.

The chromium sealed anodized aluminum support having a thickness of 800 $\mu$m, a width of 18 cm and a length of 24 cm, was covered with a parylene C precoat at the side whereupon the phosphor should be deposited, positioned at a distance - measured perpendicularly - of 22 cm between substrate and crucible vapour outlet slit.

Plates were taken out of the vapour deposition apparatus after having run same vapour deposition times, leading to phosphor plates having phosphor layers of about equal thicknesses.

The needle-image plate was exposed with a series of high X-ray doses to become absorbed, in order to determine the change in sensitivity. The plate was manufactured at Agfa-Gevaert as described hereinbefore, under number CB74222, with a coating amount of 189.2 mg of phosphor per $cm^2$.

The plate was covered with a plate of lead containing a set of holes. The set of holes was divided in five areas and every area was exposed with a different X-ray dose. The applied X-ray doses were 125 R, 250 R, 500 R, 1.5 kR and 12 kR having a beam quality RQA5.

After exposing the plate with the said X-ray doses, the plate was strongly erased with an UV-lamp (high pressure mercury), a Sodium Vapor lamp (1,000 Watt) and the normal erasure unit with halogen lamps (3,000 Watt).

After erasing an image was made with a scanner optimised for CsBr:Eu and called NOLO_II, built in-house at Agfa-Gevaert, for quality control purposes, without exposing the plate to X-rays in order to see if any remaining energy was left in the plate. Only the hole that was exposed with 12 kR, i.e. the highest absorbed X-ray dose, was slightly visible. As it was established that the signal was so low (< 0.1%) it can be neglected.

The exposure pretreatment as set forth hereinbefore, was followed by a flat field exposure, with a dose of 20 μGy (Beam quality RQA 5).

It became clear that an increase of sensitivity was observed for absorbed doses in the range from 125 Röntgen to 1500 Röntgen, whereas a decrease of sensitivity was observed for a dose of 12,000 Röntgen.

While determining the relative changes in sensitivity for the different absorbed X-ray doses following data as summarized hereinafter in Table 1, became available.

When calculating the "normalized sensitivity" from the formula sensitivity with cumulative dose / sensitivity without cumulative dose x 100 in order to express it as a percentage value, and setting out those figures in a diagram, it became clear that a maximum of the normalized sensitivity is attained at a pretreatment exposure with X-rays of about 500 Röntgen or 4.3 Gy.

Table 1

| Cumulative dose (kR) | Cumulative dose (Gy) | Relative change in sensitivity (%) |
|---|---|---|
| 0.125 | 1.1 | + 8 |
| 0.25 | 2.2 | + 11 |
| 0.5 | 4.3 | + 13 |
| 1.5 | 13.0 | + 8 |
| 12 | 104.3 | - 27 |

Within absorbed X-ray doses in the range from 125 to 1,500 Röntgen, corresponding with a range from 1.1 to 13.0 Gy, there is a change in sensitivity within a band of 5%. Higher X-ray exposure doses however tend to a steeper decrease in sensitivity, so that the radiologist would require an undesired exposure of the patient with higher X-ray doses.

As an advantageous effect of the present invention it has been established, as set forth above in the description and in the examples, that a more reproducible speed and speed distribution of the plate or panel during its life time cycle has been found, even when frequently reused by a radiologist, in that changes in speed are limited within an acceptable range of less than 5 % now.

The present invention thus provides a radiation image storage phosphor plate, which, when prepared according to the methods as described hereinbefore, offers the desired properties as envisaged.

Having described in detail preferred embodiments of the current invention, it will now be apparent to those skilled in the art that numerous modifications can be made therein without departing from the scope of the invention as defined in the appending claims.

**Claims**

1. A method of manufacturing a radiation image storage phosphor plate or panel, wherein the said plate or panel comprises a storage phosphor layer wherein a radiation image storage or photostimulable phosphor is a phosphor having an alkali metal halide salt as a main component and a lanthanide as a dopant, **characterised in that** after its manufacturing and before being used by the customer, said panel is uniformly exposed with X-rays over its whole surface area, in order to get an absorbed X-ray dose in the range from 1 to 10 Gy.

2. Method according to claim 1, wherein said X-ray dose is in the range from 2 to 6 Gy.

3. Method according to claim 1, wherein said X-ray dose is in the range from 2 to 3 Gy.

4. Method according to claim 1, wherein said X-ray dose has a beam quality conform with RQA5.

5. Method according to any one of the claims 1 to 4, wherein said radiation image storage phosphor is a CsBr:Eu phosphor.

6. Method according to claim 5, wherein said CsBr:Eu phosphor has been prepared by mixing CsBr as an alkali metal halide salt and wherein as a lanthanide dopant salt use has been made of $EuX_2$, $EuX_3$, EuOX or $EuX_z$, wherein $2 < z < 3$ and wherein X is one of Br, Cl or a combination thereof.

7. Method according to claim 5, wherein said CsBr:Eu phosphor has been prepared by mixing CsBr as an alkali metal halide salt and wherein between $10^{-3}$ and 5 mol % of a Europium compound selected from the group consisting of $EuX_2$, $EuX_3$, EuOX, or $EuX_Z$, wherein 2<z<3 and wherein X is one of Br, Cl or a combination thereof, firing the mixture at a temperature above 450°C, cooling said mixture, and recovering the CsX:Eu phosphor.

8. Method according to claim 5, wherein said CsBr:Eu phosphor has been prepared by mixing CsBr as an alkali metal halide salt and as a combination of an alkali metal halide salt and a lanthanide dopant salt, a salt according to the formula $Cs_xEu_yX'_{x+\alpha y}$, wherein x/y > 0.25, wherein $\alpha \geq 2$ and wherein X' is a halide selected from the group consisting of Cl, Br and I and combinations thereof.

9. Method according to any one of the claims 6 to 8, wherein said CsBr:Eu phosphor screen has been obtained by applying said phosphor on a substrate by a method selected from the group consisting of physical vapour deposition, thermal vapour deposition, chemical vapour deposition, radio frequency deposition and pulsed laser deposition.

10. A radiation image storage phosphor plate prepared according to the method of any one of the claims 1 to 9.

Fig. 1A

Normalised sensitivity (%) as a function of cumulative dose

Fig. 1B

Normalised sensitivity (%) as a function of cumulative dose

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 2006 064382 A (KONICA MINOLTA MEDICAL & GRAPH) 9 March 2006 (2006-03-09) * abstract * | 1-10 | INV. G21K4/00 G01T1/29 G03B42/02 |
| | ----- | | |
| D,A | EP 1 443 525 A2 (AGFA GEVAERT [BE]) 4 August 2004 (2004-08-04) * paragraphs [0043] - [0051]; claims 1-5 * | 1-10 | |
| | ----- | | |

TECHNICAL FIELDS SEARCHED (IPC)

G21K
G01T
G03B

The present search report has been drawn up for all claims

| Place of search | Date of completion of the search | Examiner |
|---|---|---|
| The Hague | 15 January 2007 | Wengeler, Heinz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................................

& : member of the same patent family, corresponding document

EPO FORM 1503 03.82 (P04C01)

EP 1 892 729 A1

**ANNEX TO THE EUROPEAN SEARCH REPORT
ON EUROPEAN PATENT APPLICATION NO.**

EP 06 11 8703

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2007

| Patent document cited in search report | Publication date | Patent family member(s) | Publication date |
|---|---|---|---|
| JP 2006064382 A | 09-03-2006 | NONE | |
| EP 1443525 A2 | 04-08-2004 | NONE | |

EPO FORM P0459

For more details about this annex : see Official Journal of the European Patent Office, No. 12/82

12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3859527 A
- US 6802991 A
- US 6730243 A
- EP 1443525 A
- US 6852357 A
- US 2005040340 A
- US 6740897 A
- US 6875990 A
- US 2002050570 A
- US 2004075062 A
- US 2004149931 A
- US 6720026 A
- US 2001007352 A
- US 2005000411 A
- US 2005000447 A
- US 2005217567 A
- US 20050077478 A
- US 2004149929 A
- US 2003113580 A
- US 7029836 A
- US 6815692 A
- US 20040131767 A
- US 20040188634 A
- US 20050040340 A
- US 20050077477 A
- US 20040051441 A
- US 20040051438 A
- US 6927404 A
- US 6710356 A
- US 6822243 A
- US 20050067584 A
- EP 06118157 A
- EP 06118158 A
- US 6815095 A
- US 20030134087 A
- US 6967339 A
- US 20060076525 A
- US 6800362 A
- US 20030168611 A
- US 6977385 A
- US 5334842 A
- US 5340661 A